(19) **Europäisches Patentamt / European Patent Office / Office européen des brevets**

(11) **EP 2 042 951 B1**

(12) **EUROPEAN PATENT SPECIFICATION**

(45) Date of publication and mention
of the grant of the patent:
**27.10.2010 Bulletin 2010/43**

(51) Int Cl.:
***G05B 13/04*** *(2006.01)*

(21) Application number: **07075838.8**

(22) Date of filing: **27.09.2007**

(54) **A.C. drive  built-in regulator tuning**

Einstellung eines in einen Wechselstromantrieb eingebauten Reglers

Réglage de régulateur intégré à commande CA

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**01.04.2009 Bulletin 2009/14**

(73) Proprietors:
• **Vacon Oyj**
**65380 Vaasa (FI)**
• **Honeywell ACS**
**Golden Valley MN 55422 (US)**

(72) Inventors:
• **Morris, Michael**
**Bracknell**
**Berkshire, RG 12 0UE (GB)**

• **Haapamäki, Pekka**
**04200 Kerava (FI)**
• **Kekkonen, Simo**
**01800 Klaukkala (FI)**

(74) Representative: **Järveläinen, Pertti Tauno Juhani
et al**
**Heinänen Oy Patent Agency**
**Airport Plaza**
**Äyritie 8 D**
**01510 Vantaa (FI)**

(56) References cited:
**US-A- 4 388 577**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates to tuning of the process regulator that is built in an A.C. motor drive.

**Background of the invention**

In industrial processes where the A.C. motor rotating speed or torque needs to be adjusted, a frequency converter controlled squirrel-cage A.C. motor is nowadays most often used. In the following this kind of a system is called an A.C. motor drive.

The most common frequency converter type at present is the voltage controlled PWM (Pulse Width Modulation) drive unit, where the supply A.C. voltage is rectified with a rectifier bridge, filtered in the intermediate circuit by a capacitor having a high capacitance value in order to produce constant DC-voltage and finally inverted with an inverter bridge to an adjustable output voltage consisting of pulses with heights of the constant intermediate circuit DC-voltage. For adjusting the motor speed, the frequency and amplitude of the fundamental component of the output voltage is adjusted by controlling the number and width of the frequency converter output voltage pulses (= Pulse Width Modulation). In the following the power stage of the frequency converter is called a drive unit and the control part is called a control unit.

For controlling the motor speed in an optimal way in the motor drive system, normally a regulator is used which forms a motor speed reference signal for the drive unit from the actual measured process signals. Normally digital PI or PID type regulators are used. The regulator can be situated in a separate PLC (programmable logic) unit or, in modern frequency converters, it can be in-built in the control unit's software as a part of the frequency converter's functionality.

The regulator needs to be tuned in order to achieve the optimum performance of the process. If it is possible to make tests by the real process, the tuning can be done by a trial and error method by changing the regulator parameter values, e.g. by giving an impulse to the reference value and observing the process output results. Some known systematic method, e.g. the Ziegler-Nichols oscillation method, can be used to determine optimum regulator settings.

Trial and error method is not always possible, in which case the tuning can be done by simulating the process and regulator operation. The simulation is normally done in a separate simulator e.g. in a personal computer. For simulation purpose the process and the regulator need to be modeled in the computer. The problem with this simulation tuning method is that the real built-in regulator in the drive unit doesn't necessarily work exactly the same way as the simulation model because of e.g. different clock frequencies, different measuring intervals etc. This causes that the regulator parameter tuning values, after programmed to the control unit, do not necessarily yield the same optimum process performance as in the simulator. Another disadvantage is that a separate simulation tool is needed with a person who is skilled to use it. This may increase need for extra personnel during the process commissioning, since the same person doesn't necessarily have both simulation and process expertise.

US 4 388 577 describes a method of tuning an in-built process regulator.

**Brief description of the invention**

The object of the present invention is to overcome the problems with the existing methods in the process regulator tuning by providing a process simulation tool which is integrated into the control unit of the frequency converter.

The main advantage of this invention is that the process simulation is more exact than with the known simulation tool methods running in separate simulators. This is because the built-in simulator inside the control unit is using exactly the same regulator that is working also during the real operation, which means that the inaccuracies caused by different regulator clock frequencies, step response times, measuring intervals etc. can be avoided. The control unit input/output signals can be used in the simulation for e.g. representing opening/closing of valves/dampers.

One possible operating mode of this tool is autotuning, where the optimum PI- or PID regulator tuning values will be found automatically according to e.g. Ziegler-Nichols or Fuzzy method. In this case the need for a simulator expert can be avoided during commissioning, only the process specialist who can give the process parameters is needed.

Simulation models can be built and modified using standard application programming tools so that extra knowledge of personal computer simulation tool programming is not needed. New simulation models can also be downloaded into the control unit memory.

Another advantage is that standard drive monitoring equipment (keypad and/or PC monitoring software) can be used to monitor the output of the simulation model and control performance. This kind of monitoring is still not absolutely required for the operation of the simulation model.

This invention is best suitable for pumping and ventilation process simulation, but it is not limited only in these industrial process applications.

**Brief description of the figures**

In the following, preferred embodiments of the present invention will be described in detail by reference to the enclosed drawings, wherein

Fig. 1 presents a process block diagram
Fig. 2 presents a block diagram of a control feedback loop,
Fig. 3 illustrates an error function diagram
Fig. 4 presents a frequency converter with in-built process simulation feature according to the present invention.

**Detailed description of the preferred embodiments**

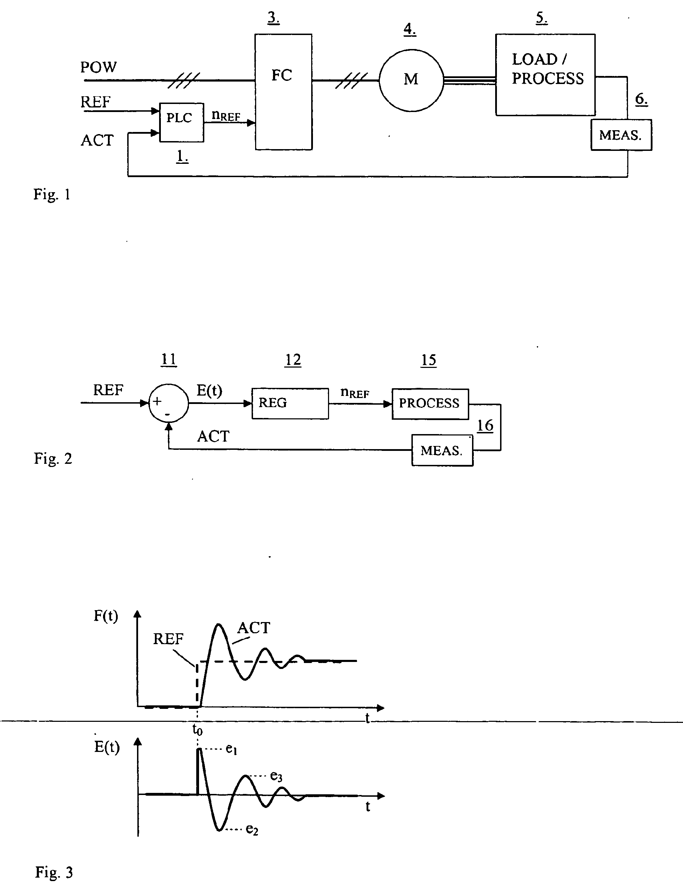

Fig. 1 presents a block diagram of an example of an A.C. motor drive controlled industrial process. It includes a load/process 5, e.g. a water tank where the water level is wanted to stay at desired level. The water pump is controlled by the process "workhorse" consisting of a frequency converter 3 and an A.C. motor 4, where the frequency converter drives the motor according to the speed referance $n_{REF}$. The water level is regulated by a programmable logic (PLC) 1, which forms the motor speed reference $n_{REF}$ as a function of the water reference level REF and water actual level ACT given by the process measurement block 6. The PLC may also be integrated into the frequency converter control unit.
Fig. 2 presents the known general block diagram of the example process 15 with a control feedback loop. In the diagram REF is the reference signal of the process and ACT is the signal of the controlled process actual value (e.g. the desired and actual values of the water level in the tank) measured with measurement block 16. The difference between the reference and actual values is formed in the amplifier 11, which error function $E(t)$ is then handled in the regulator 12. The output of the regulator (e.g. the pump motor speed reference $n_{REF}$) acts then to the process 13.
In Fig. 3 some typical diagrams of process variables are illustrated in a situation, where the reference value REF changes stepwise at the moment to. This causes a corresponding step to the error function $E(t)$, which in turn causes the regulator 12 to react by changing its output value $n_{REF}$. This reaction causes the process actual value ACT to start changing towards the new reference value. The actual value can exceed the reference and oscillate some time around the reference before stabilizing.
From the process point of view the actual value oscillations are harmful, and the target of the regulator tuning is to minimize them. Normally a PID type regulator is used, but other types can also be used, e.g. a Fuzzy regulator. A PID regulator transfer function in this example is:

$$n_{ref} = K_p \times E(t) + K_I \times \int E(t)dt + K_D \times \frac{dE(t)}{dt} \qquad [\,1\,]$$

where

$K_p$ = gain factor
$K_I$ = integral factor
$K_p$ = derivative factor

The tuning of the regulator means finding optimum values for the gain, integral and derivative factors. Several known methods can be used in the tuning, like e.g. Ziegler-Nichols method. In general the target is to minimize the error maximum value ($e_1$ in Fig.3) and maximize the damping ($e_1/e_2$, $e_2/e_3$ in Fig. 3).

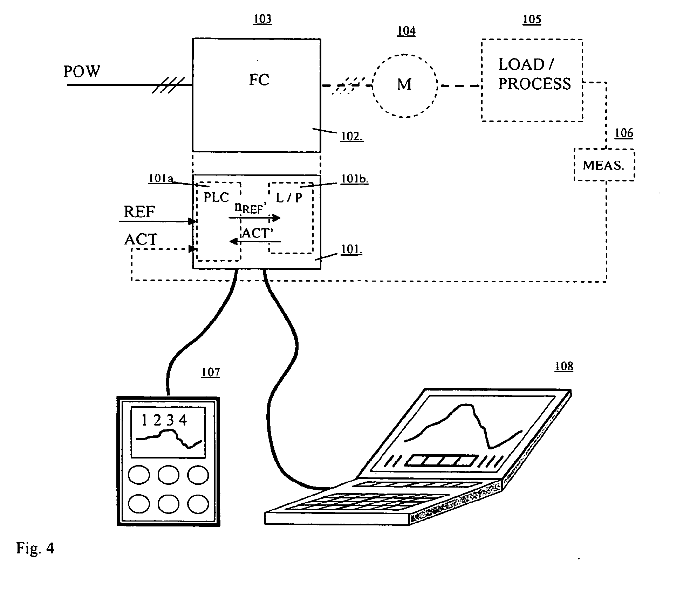

Fig. 4 presents the frequency converter with built-in regulator and simulation tool. It includes a frequency converter 103 consisting of a control unit 101 and drive unit (power stage) 102, an A.C. motor 104 and, load/process 105 and measurement 106. The control unit 101 has in-built PLC function 101 a and load/process simulation model 101 b. The drive keypad 107 or external personal computer 108 may be connected to the control unit as operation/monitoring device.
For the simulation the parameters describing the process are programmed into the control unit. The process simulation and regulator tuning can be started from the drive operation panel, that is normally part of the control unit. The regulator tuning parameter values can also be given with the keypad 107 as parameter input or they can be found out by starting the autotuning mode, where the simulation tool automatically finds regulator parameters that meet best the optimum criteria. During the simulation the regulator inside the PLC function 101 a may e.g. send a speed reference signal $n_{REF}'$, representing the pump rotating speed, to the load/process model 101 b and receive the corresponding actual process value ACT' from the process model 101 b. The simulator outcome, e.g. the process actual value diagram after the reference or load impulse, can be seen from the drive operation panel (if it includes a graphical display) or from the display of a separate computer connected to the control unit.

When the simulation result is satisfactory, the regulator tuning values can be left as they are and turn the frequency converter to the normal operating mode with the simulated optimum regulator tuning factors in real use.

It is obvious to the person skilled in the art that the embodiments of the invention are not restricted to the example presented above, but that they can be varied within the scope of the following claims.

## Claims

1. Method of tuning an in-built process regulator (101 a) in an A.C. motor drive controlled industrial process
   wherein the A.C. motor drive consists of an A.C. motor (104) and a frequency converter(103) with a drive unit (102) and a control unit (101),
   whereby frequency converter(103) provides an adjustable output voltage controlling the A.C. motor,
   wherein the regulator is integrated into the control unit,
   **characterized in that**
   the tuning is based in the process simulation and
   the process simulation function operates in-built in the control unit of the frequency converter.

2. Method as defined in claim 1,
   **characterized in that** the tuning is implemented automatically using the in-built autotuning function.

3. Method as defined in claim 1,
   **characterized in that**
   the simulation parameters describing the process are programmed into the control unit.

4. Method as defined in claim 1,
   **characterized in that**
   the regulator tuning parameter values are provided by means of input means (107).

5. Method as defined in at least one of the preceding claims,
   **characterized in that** an in-built PLC function (101 a) is integrated into the regulator.

6. Method as defined in at least one of the preceding claims,
   **characterized in that** the control unit has two modes, a simulation mode and a normal operaton mode, whereby during the simulation the simulation has reached a satisfactory result the regulator tuning values can be left as they are and turn the frequency converter to the normal operating mode.

7. System for tuning an in-built process regulator (101a) in an A.C. motor drive controlled industrial process
   wherein the A.C. motor drive consists of an A.C. motor (104) and a frequency converter(103) with a drive unit (102) and a control unit (101),
   whereby the frequency converter (103) is adapted to provide an adjustable output voltage controlling the A.C. motor,
   wherein the regulator is integrated into the control unit,
   **characterized in that** the system comprises a process simulator simulating the process ,
   whereby the process simulator is in-built in the control unit of the frequency converter.

8. System as defined in claim 7,
   **characterized in that** the regulator comprises means for implementing the tuning automatically using the in-built autotuning function.

9. System as defined in claim 7,
   **characterized in that**
   the system comprises a control software whereby the simulation parameters describing the process can be programmed into the control unit.

10. System as defined in claim 7,
    **characterized in that**
    the system comprises input means (107) by means of which the regulator tuning parameter values can be provided.

**11.** System as defined in at least one of the preceding claims 7 to 10,
**characterized in that** it comprises standard drive monitoring equipment, such as a keypad and/or a PC monitoring software, adapted to are used to monitor the output of the simulation model and control performance.

## Patentansprüche

**1.** Verfahren zum Einstellen eines eingebauten Ablaufreglers (101 a) in einen wechselstrommotorantriebgesteuerten Industrieablauf
wobei der Wechselstrommotorantrieb aus einem Wechselstrommotor (104) und einem Frequenzwandler (103) mit einer Antriebseinheit (102) und einer Steuereinheit (101) besteht,
wobei der Frequenzwandler (103) eine anpassbare Ausgangsspannung bereitstellt, welche den Wechselstrommotor steuert,
wobei der Regler in die Steuereinheit integriert ist,
**dadurch gekennzeichnet, dass**
das Einstellen auf der Ablaufsimulation basiert und
die Ablaufsimulationsfunktionalität eingebettet in die Steuereinheit des Frequenzwandlers abläuft.

**2.** Verfahren gemäß Anspruch 1,
**dadurch gekennzeichnet, dass**
das Einstellen automatisch mittels Verwenden der eingebauten Autotuning-Funktionalität umgesetzt ist.

**3.** Verfahren gemäß Anspruch 1,
**dadurch gekennzeichnet, dass**
die Simulationsparameter, welche den Ablauf beschreiben, in die Steuerungseinheit einprogrammiert sind.

**4.** Verfahren gemäß Anspruch 1,
**dadurch gekennzeichnet, dass**
die Reglereinstellungsparameterwerte mittels Eingabemittel (107) bereitgestellt werden.

**5.** Verfahren gemäß mindestens einem der vorhergehenden Ansprüche,
**dadurch gekennzeichnet, dass**
eine eingebaute PLC-Funktionalität (101 a) in den Regler integriert ist.

**6.** Verfahren gemäß mindestens einem der vorhergehenden Ansprüche,
**dadurch gekennzeichnet, dass**
die Steuerungseinheit zwei Modi hat, einen Simulationsmodus und einen normalen Betriebsmodus, wobei wenn während der Simulation die Simulation ein befriedigendes Ergebnis erzielt hat, die Reglereinstellungswerte so wie diese sind belassen werden können und der Frequenzwandler in den normalen Betriebsmodus geschaltet werden kann.

**7.** System zur Einstellung eines eingebauten Ablaufreglers (101a) in einen wechselstrommotorantriebeingebauten Ablaufreglers (101a) gesteuerten Industrieablauf
wobei der Wechselstrommotorantrieb aus einem Wechselstrommotor (104) und einem Frequenzwandler (103) mit einer Antriebseinheit (102) und einer Steuereinheit (101) besteht,
wobei der Frequenzwandler (103) zum Bereitstellen einer anpassbaren Ausgangsspannung, welche den Wechselmotor steuert, angepasst ist,
wobei der Regler in die Steuerungseinheit integriert ist,
**dadurch gekennzeichnet, dass**
das System einen Ablaufsimulator, welcher den Ablauf simuliert,
wobei der Ablaufsimulator in die Steuerungseinheit des Frequenzwandlers integriert ist, umfasst.

**8.** System gemäß Anspruch 7,
**dadurch gekennzeichnet, dass**
der Regler Mittel zum automatischen Umsetzen des Einstellens unter Verwendung der eingebauten Autotuning-Funktionalität umfasst.

**9.** System gemäß Anspruch 7,

**dadurch gekennzeichnet, dass**
das System ein Steuerprogramm umfasst, wobei die Simulationsparameter, welche den Ablauf beschreiben, in die Steuerungseinheit programmiert werden können.

**10.** System gemäß Anspruch 7, **dadurch gekennzeichnet, dass** das System Eingabemittel (107) umfasst mittels derer die Reglereinstellungsparameterwerte bereitgestellt werden können.

**11.** System gemäß mindestens einem der vorhergehenden Ansprüche
**dadurch gekennzeichnet, dass**
es Standardantriebsüberwachungsausrüstung umfasst, wie ein Tastenfeld und/ oder ein Rechnerüberwachungsprogramm, welche zum Verwenden zum Überwachung der Ausgabe des Simulationsmodells und zum Kontrollieren der Performanz angepasst ist.

**Revendications**

**1.** Procédé d'accord d'un régulateur de processus intégré (101a) dans un processus industriel contrôlé par une commande à moteur alternatif,
dans lequel la commande à moteur alternatif consiste en un moteur alternatif (104) et un convertisseur de fréquence (103) avec une unité de commande (102) et une unité de contrôle (101),
par lequel le convertisseur de fréquence (103) fournit une tension de sortie ajustable contrôlant le moteur alternatif,
dans lequel le régulateur est intégré dans l'unité de contrôle,
**caractérisé en ce que**
l'accord est basé sur la simulation de processus, et
la fonction de simulation de processus est intégrée dans l'unité de contrôle du convertisseur de fréquence.

**2.** Procédé selon la revendication 1,
**caractérisé en ce que** l'accord est effectué automatiquement en utilisant une fonction d'autoaccord intégrée.

**3.** Procédé selon la revendication 1,
**caractérisé en ce que**
les paramètres de simulation décrivant le processus sont programmés dans l'unité de contrôle.

**4.** Procédé selon la revendication 1,
**caractérisé en ce que**
les valeurs des paramètres d'accord de régulateur sont fournies par des moyens d'entrée (107).

**5.** Procédé selon au moins l'une des revendications précédentes,
**caractérisé en ce qu'**une fonction de PLC intégrée (101a) est intégrée dans le régulateur.

**6.** Procédé selon au moins l'une des revendications précédentes,
**caractérisé en ce que** l'unité de contrôle a deux modes, un mode de simulation et un mode de fonctionnement normal, moyennant quoi, pendant la simulation, lorsque la simulation a atteint un résultat satisfaisant, les valeurs d'accord de régulateur peuvent être laissées telles qu'elles sont et le convertisseur de fréquence peut être amené dans le mode de fonctionnement normal.

**7.** Système d'accord d'un régulateur de processus intégré (101a) dans un processus industriel contrôlé par une commande à moteur alternatif,
dans lequel la commande à moteur alternatif consiste en un moteur alternatif (104) et un convertisseur de fréquence (103) avec une unité de commande (102) et une unité de contrôle (101),
moyennant quoi le convertisseur de fréquence (103) est adapté pour fournir une tension de sortie ajustable contrôlant le moteur alternatif,
dans lequel le régulateur est intégré dans l'unité de contrôle, **caractérisé en ce que** le système comprend :

un simulateur de processus simulant le processus,
moyennant quoi le simulateur de processus est intégré dans l'unité de contrôle du convertisseur de fréquence.

**8.** Système selon la revendication 7,

**caractérisé en ce que** le régulateur comprend des moyens pour effectuer l'accord automatiquement en utilisant la fonction d'autoaccord intégrée.

9. Système selon la revendication 7,
   **caractérisé en ce que**
   le système comprend un logiciel de contrôle par lequel les paramètres de simulation décrivant le processus peuvent être programmés dans l'unité de contrôle.

10. Système selon la revendication 7,
    **caractérisé en ce que**
    le système comprend des moyens d'entrée (107) au moyen desquels les valeurs des paramètres d'accord de régulateur peuvent être fournies.

11. Système selon au moins l'une des revendications 7 à 10 précédentes,
    **caractérisé en ce qu'**il comprend un équipement de surveillance de commande standard, tel qu'un pavé numérique et/ou un logiciel de surveillance de PC, adapté pour être utilisé pour surveiller la sortie du modèle de simulation et la performance de contrôle.

Fig. 1

Fig. 2

Fig. 3

8

POW

<u>103</u>

FC

<u>102.</u>

<u>104</u>

M

<u>105</u>

LOAD /
PROCESS

<u>106</u>

MEAS.

<u>101a.</u>

PLC

<u>101b.</u>

L / P

REF

$n_{REF}$'

ACT

ACT'

<u>101.</u>

<u>107</u>

1 2 3 4

<u>108</u>

Fig. 4

9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4388577 A